# EUROPÄISCHE PATENTANMELDUNG

(11) **EP 2 607 841 A2**
(43) Veröffentlichungstag der Anmeldung: **26.06.2013**
(21) Anmeldenummer: 12193545.6
(22) Anmeldetag: 21.11.2012
(51) Int. Cl.: G01C 3/08, G01C 15/00

(54) **Optisches System**

(30) Priorität: 23.12.2011 DE 102011089837
(71) Anmelder: HILTI Aktiengesellschaft, 9494 Schaan (LI)
(72) Erfinder: Winter, Andreas, 6800 Feldkirch (AT); Gogolla, Torsten, 9494 Schaan (LI); Wuersch, Christoph, 9470 Werdenberg (CH); Seifert, Helmut, 07616 Serba (DE)

(57) **Zusammenfassung**

Optisches System 100, 100' aufweisend eine Strahlungseinrichtung 10 mit einem Rotationszeiger, insbesondere Rotationslaser, zur berührungslosen Anzeige einer Azimut-Ebene E an einem umfänglich angeordneten Zielobjekt, der ausgebildet ist, unter Aussendung optischer Zeigerstrahlung ein in der Azimut-Ebene E rotierendes oder drehendes Lichtsignal zu erzeugen, eine Steuer- und Recheneinheit 15, die ausgebildet ist, den Rotationszeiger in einen ersten Betriebsmodus I oder einen zweiten Betriebsmodus II zu versetzen, wobei im ersten Betriebsmodus I mittels dem Rotationszeiger ein über einen Vollwinkel kontinuierlich rotierendes und in dem zweiten Betriebsmodus II ein in einem begrenzten Winkelsektor eines Vollwinkels drehbares Lichtsignal erzeugbar ist und aufweisend einen Strahlungsempfänger 20, 20', der zum Empfang und/oder Reflektion optischer Strahlung S ausgebildet ist.

## Beschreibung

### Technisches Gebiet

Die Erfindung betrifft ein optisches System gemäß dem Oberbegriff des Anspruchs 1.

### Stand der Technik

Optische Strahlungseinrichtungen sind mittlerweile in unterschiedlichster Form als Hilfsmittel verfügbar, um Anzeige- oder Messaufgaben in einer Umgebung eines Zielobjekts durchzuführen. Eine optische Strahlungseinrichtung kann dazu handgeführt und/oder bei Bedarf auf einem Stativ angebracht sein.

Für Distanzmessaufgaben sind mittlerweile sowohl handgehaltene, vergleichsweise einfache Handlasermessgeräte wie beispielsweise aus DE 198 36 812 A1 bekannt. Es sind auch so genannte Totalstationen bekannt, die neben einer Distanzmessung auch Angaben zu einem Drehwinkel relativ zu einem vorgegebenen Koordinatensystem oder dergleichen erlauben. Eine Totalstation kann eine optische Strahlungseinrichtung wie in DE 697 33 014 T2 in Form eines Scanners umfassen, um vergleichsweise schnell und genau die Position von ausgewählten Punkten auf der Oberfläche eines Objekts im dreidimensionalen Raum abzutasten. Es wird eine Punktwolke erzeugt, welche die abgetasteten Positionen der ausgewählten Punkte unter Distanz- und Winkelangabe darstellt. Eine solche Einrichtung wird auch als Field-Digital-Vision (FDV) Modul bezeichnet und erlaubt eine Scanführung zum Scannen lediglich einer Teiloberfläche eines Zielobjekts im dreidimensionalen Raum. Das Scansystem enthält doppelte orthogonale Scanspiegel, Galvo-Motoren sowie Kodierer für die Lenkung des Laserstrahls und zur Bestimmung des Azimut- und Höhenwinkels des Laserstrahls aus den Spiegelpositionen. Der Laser wird gepulst und die Entfernung bis zum Objekt wird über die Laufzeit vom Sender - Empfänger zum Objekt und zurück gemessen. Das Modul ist in einer Gabellagerung gelagert, um ein Anvisieren eines sehr begrenzten Gesichtsfeldes auf einem Zielobjekt zu ermöglichen. Grundsätzlich basieren solche Totalstationen auf dem begrenzten Konzept einer Laserdistanzmessung mit erweitertem Gesichtsfeld.

Eine ebenfalls hinsichtlich des Gesichtsfeldes erweiterte optische Distanzmesseinrichtung zur geodätischen und industriellen Vermessung von sowohl kooperativen Zielobjekten als auch nicht-kooperativen Zielobjekten ist aus DE 198 40 049 C5 bekannt, bei welcher trennbare Strahlungsbündel unterschiedlicher Divergenz auf einer einzigen optischen Achse zur Distanzmessung auf ein Zielobjekt gelenkt werden können.

In DE 10 2005 000 060 A1 ist ein Distanzmessgerät als Flächenkoordinaten-Messgerät ausgebildet und weist dazu ein optisches Entfernungsmesssystem auf, das zur gleichzeitigen Bestimmung einer Querdistanz und einer Längsdistanz ausgehend von einem Positionierungsmittel geeignet ist. Auf einem gesteuerten Schwenkmittel angebracht eignet sich das Gerät unter Erfassung eines Winkels zur Messung einer Längs- und Querdistanz um mittels trigonometrischer Funktionen die Flächenkoordinaten des Positionierungsmittels zu bestimmen. Auch dieses Messgerät basiert im Wesentlich auf dem Konzept einer Distanzmessung in einem sehr begrenzten Winkelbereich.

Dagegen offenbart EP 206 3 222 A2 ein optisches Anzeige-System der eingangs genannten Art, nämlich mit einer Strahlungseinrichtung, die einen Rotationslaser zur berührungslosen Anzeige einer Azimut-Ebene an einem umfänglichen Zielobjekt aufweist, als auch einen Strahlungsempfänger der zum Empfang und/oder Reflexion optischer Strahlung zur Strahlungseinrichtung, ausgebildet ist. Der Rotationslaser dient ausschließlich als Zeigereinrichtung, die zur Aussendung optischer Zeigerstrahlung ausgebildet ist. Mittels einer Steuer- und Recheneinheit kann diese in einem umlaufend rotierenden Betriebsmodus einerseits als auch in einem in der Azimut-Ebene innerhalb eines Winkelsektors scannenden Betriebsmodus betrieben werden. Der Strahlungsempfänger dient dabei als Fernsteuerung mittels der ein Umschalten vom rotierenden Betriebsmodus in den scannenden Betriebsmodus veranlasst werden kann, derart dass die Zeigereinrichtung innerhalb eines Winkelsektors um die Projektion der Fernsteuerung auf die Strahlebene hin und her geschwenkt wird. Selbst bei schlechten Lichtverhältnissen kann so der Laserstrahl der Zeigereinrichtung exakt erfasst werden. Ein solches als Anzeige-System ausgelegtes optisches System ist noch verbesserbar.

Insbesondere ist es wünschenswert bei Anwendungen im Baubereich ein optisches Anzeige-System für die Verwendung bei Messungen auszugestalten.

### Darstellung der Erfindung

An dieser Stelle setzt die Erfindung an, deren Aufgabe es ist, ein verbessertes optisches System anzugeben, das ein in zwei Betriebsmodi betreibbares optisches Anzeigesystem umfasst. Insbesondere soll ein Anzeigesystem der eingangs genannten Art in der Lage sein, in beiden Betriebsmodi Distanzen und/oder Winkel in verbesserter Weise zu erfassen und anzuzeigen, insbesondere auch zu messen.

Die Aufgabe betreffend das optische System wird mit einem optischen System der eingangs genannten Art gelöst, bei dem erfindungsgemäß auch die Merkmale des kennzeichnenden Teils des Anspruchs 1 vorgesehen sind.

Die Erfindung geht von der Überlegung aus, dass insbesondere für Anwendungen im Baugewerbe ein optisches System einen Rotationszeiger aufweisen sollte, der in einem rotierenden und einem scannenden Betriebsmodus betreibbar ist. Diese Voraussetzung soll die Nivellierung bzw. Anzeige u.a. von geneigten Flächen an einem umfänglich angeordneten Zielobjekt ermöglichen. Die Erfindung geht weiter von der Überlegung aus, dass es - zur Vermeidung von weiteren separaten Messmitteln und Messmaßnahmen, wie beispielsweise separaten Distanzmessgeräten oder Winkelmessgeräten oder dergleichen - vorteilhaft möglich sein sollte, die Strahlungseinrichtung auch zur Erfüllung von Messaufgaben weiterzubilden. Die Erfindung hat erkannt, dass es zur Erfüllung der Aufgabe vorteilhaft ist, den aktuellen Azimut-Winkel des Lichtsignals des Rotationszeigers als auch die Distanz eines Messpunkts der Distanzmesseinrichtung für eine Weiterverarbeitung im ersten und zweiten Betriebsmodus kontinuierlich zu erfassen. Erfindungsgemäß ist gemäß den Merkmalen des Anspruchs 1 vorgesehen, die Strahlungseinrichtung mit einer Winkelerfassung und einer Distanzmesseinrichtung zusätzlich zum Rotationszeiger zu versehen. Zur Realisierung des Konzepts der Erfindung verläuft eine Strahlungsführung der Messstrahlung und der Zeigerstrahlung derart, dass der Distanzmesspunkt am oder in unmittelbarer Nähe des Lichtsignals platzierbar ist. Eine Distanzmessung ist also am gleichen Ort des Lichtsignals oder wenigstens in dessen unmittelbarer Nähe durchführbar. Auf diese Weise erhält ein Anwender aufgrund des Konzepts der Erfindung zum Ort des Lichtsignals eine Messwert-Information über den Winkel des Lichtsignals in der Azimut-Ebene als auch über die Distanz des Messpunkts - also praktisch des Lichtsignals zur Strahlungseinrichtung bzw. einem Referenzpunkt in der Strahlungseinrichtung. Die Erfindung hat erkannt, dass sich diese Maßnahme in beiden Betriebsmodi für eine besonders bevorzugte Weiterverarbeitung des Azimut-Winkels und der Distanz nutzen lässt.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Im Rahmen einer bevorzugten konstruktiven Realisierung weist der Rotationszeiger eine dreh- und rotierbare optische Zeigereinrichtung, eine Strahlungseinheit und eine Rotationsoptik auf. Die Strahlungseinheit ist bevorzugt in Form einer Lasereinheit gebildet. Die Distanzmesseinrichtung weist bevorzugt eine Strahlungseinheit, insbesondere eine Lasereinheit, und eine Optikeinheit mit Optikelementen auf. Insbesondere weist die Distanzmesseinrichtung eine Sende- und Empfangsoptik auf, sowie einen eine optische Achse aufweisenden rotierbaren optischen Sendepfad zur Aussendung von Messstrahlung auf das Zielobjekt und einen eine optische Achse aufweisenden rotierbaren optischen Empfangspfad zum Empfangen von vom Zielobjekt reflektierter und/oder zurückgestreuter Messstrahlung. Mittels eines solchen koaxial oder biaxial aufgebauten Sende- und Empfangspfad einer Sende- und Empfangsoptik einer Distanzmesseinrichtung lässt sich eine berührungslose Messung einer Distanz zum Messpunkt am Zielobjekt realisieren. Insbesondere lassen sich grundsätzlich unabhängig von der verwendeten Messstrahlung unterschiedliche Verfahren zur Distanzmessung realisieren, die als solche bekannt sind, beispielsweise lässt sich eine Distanz zu einem Zielobjekt berührungslos unter Verwendung einer Laufzeitmessung, einer Phasenmessung oder einer Laser-Triangulation bestimmen.

Die Strahlungseinheit des Rotationszeigers und die Strahlungseinheit der Distanzmesseinrichtung können, müssen aber nicht, identisch sein. Im Rahmen einer vergleichsweise kompakten und einfach ausgeführten Weiterbildung lässt sich mit einer identischen Strahlungseinheit für Rotationszeiger und Distanzmesseinrichtung eine im Wesentlichen identische Zeigerstrahlung und Messstrahlung realisieren. Anders ausgedrückt werden das Lichtsignal und der Messpunkt vorteilhaft von einer einzigen Strahlung realisiert, die gleichzeitig als Zeigerstrahlung und Messstrahlung dient.

Für den gegebenenfalls vorteilhaften Fall unterschiedlicher Strahlungseinheiten des Rotationszeigers und der Distanzmesseinrichtung lassen sich für die Zeigerstrahlung und die Messstrahlung bevorzugt unterschiedliche optische Strahlungen realisieren. Diese können insbesondere wellenlängen- und/oder farbunterschiedlich sein. Auf diese Weise lässt sich z.B. ein Lichtsignal und ein Messpunkt mit unterschiedlichen Farben übereinander oder in unmittelbarer Nähe nebeneinander an einem umfänglichen Zielobjekt für den Anwender ersichtlich machen. Je nach Bedarf lässt sich eine optische Achse für die Strahlungsführung der Zeigerstrahlung des Rotationszeigers und eine optische Achse für die Strahlungsführung der Messstrahlung der Distanzmesseinrichtung in der Strahlungseinrichtung wenigstens teilweise übereinander oder wenigstens para-axial zueinander anordnen, insbesondere im Bereich einer Auskoppeloptik der Strahlungseinrichtung.

In konstruktiv bevorzugter Realisierung der Winkelerfassung lässt sich diese mit einer Reihe von entlang eines Winkelumfangs einer Zeigereinrichtung des Rotationszeigers angeordneten Sensoren realisieren. Die Sensoren dienen vorteilhaft zur Erfassung von vom Lichtsignal reflektierter Strahlung und können so einen aktuellen Azimut-Winkel des Lichtsignals erfassen. Andere als die hier genannte bevorzugte Weiterbildung einer Winkelerfassung sind je nach Bedarf und Genauigkeitsanforderung der Winkelerfassung realisierbar. Insbesondere lässt sich eine Winkelerfassung beispielsweise wie in EP 2 063 222 A2 dargestellt realisieren, deren Offenbarungsgehalt hiermit durch Zitat in die vorliegende Anmeldung aufgenommen ist.

Bevorzugt sind die Strahlungseinrichtung und die Steuer- und Recheneinheit kompakt in einem Gehäuse angeordnet.

Im Rahmen einer besonders bevorzugten Weiterbildung lässt sich dem Konzept der Erfindung folgend, die Weiterverarbeitung von Azimut-Winkel und Distanz insbesondere im ersten Betriebsmodus besonders bevorzugt für Anwendungen im Bauhaupt- und Hilfsgewerbe ausbilden.

Bevorzugt ist wenigstens im ersten Betriebsmodus die Winkelgeschwindigkeit des rotierenden Lichtsignals adaptiv einstellbar, wobei im ersten Betriebsmodus der Azimut-Winkel als ein Rotationswinkel des kontinuierlich rotierenden Lichtsignals kontinuierlich erfassbar ist. Unter Adaption der Winkelgeschwindigkeit lässt sich auch mit vergleichsweise begrenzter Rechenelektronik selbst eine komplexe Geometrie kontinuierlich mit Werten für einen Azimut-Winkel und eine Distanz erfassen. Alternativ können die Rotation des Lichtsignals und die Messdatenerfassung auch schrittweise erfolgen. Insbesondere hat es sich als vorteilhaft erwiesen, dass wenigstens im ersten Betriebsmodus ein Weiterverarbeitungsmodul der Steuer- und Recheneinheit ausgebildet ist, mittels der Werte für einen Azimut-Winkel und eine Distanz ein Raumkoordinaten-System des Zielobjektes zu erfassen. Die Bestimmung kann besonders vorteilhaft unter Ermittlung von Extremalpunkten in einer Werteliste von Azimut-Winkel und zugeordneter Distanz erfolgen, z.B. anhand eines Extrempunktes lässt sich regelmäßig eine Raumecke festmachen. Vorteilhaft lassen sich zur Bestimmung des Raumkoordinaten-Systems des Zielobjekts weitere Bildgabemitttel und/oder Signalisierungsmittel nutzen. Besonders vorteilhaft kann über eine Schnittstelle der Strahlungseinrichtung der Steuer- und Recheneinheit beispielsweise eine Planinformation über das Zielobjekt zuführbar sein.

Vorteilhaft lässt sich das optische Messsystem durch eine im Gehäuse desselben angeordnete fotoelektrische Bilderfassung mit einer Sucher- und Kameraoptik erweitern. Eine Sucher- und Kameraoptik weist vorteilhaft einen diese verbindenden Bildfad zur Erfassung von Zielpunkten des Zielobjektes, insbesondere des Lichtsignals und des Messpunkts, auf sowie eine Bildverarbeitungseinheit zur Erstellung eines fotoelektrischen Bildes des Zielobjektes. Auch dadurch lässt sich eine Erfassung des Raumkoordinaten-Systems des Zielobjektes vorteilhaft unterstützen. Es lassen sich auch die über die Werte der Azimut-Winkel und Distanzen ermittelten Raumkoordinaten des Zielobjektes auf Konsistenz prüfen. Mit der fotoelektrischen Bilderfassung kann das System ausserdem gezielt dezidierte Zielemerkmale, wie z.B. Eckpunkte oder Kanten eines Raumes anfahren und vermessen.

Vorteilhaft weist die Strahlungseinrichtung weiter einen Kippsensor auf, mittels dem ein Neigewert der Steuer und Recheneinheit zuführbar ist. So lässt sich eine etwaige Korrektur oder Koordinatentransformation in Bezug auf eine Neigung der Strahlungseinrichtung durchführen.

Die vorgenannten, bevorzugten Weiterbildungen lassen sich in besonders vorteilhafter Weise im ersten Betriebsmodus für eine selbstständige Einnivellierung des optischen Messsystems nutzen. Besonders bevorzugt weist der erste Betriebsmodus einen über die Steuer- und Recheneinheit automatisch aktivierbaren Selbstausrichtungsmodus auf. Bevorzugt ist im Selbstausrichtungsmodus vorgesehen, dass das Koordinatensystem der Strahlungseinrichtung mit dem Koordinatensystem eines Raumes des Zielobjektes automatisch - insbesondere ohne Anwenderinteraktion - abgleichbar und/oder in Übereinstimmung bringbar ist. Insbesondere kann zusätzlich oder alternativ das Koordinatensystem der Strahlungseinrichtung mit dem Koordinatensystem einer Planinformation abgleichbar und/oder in Übereinstimmung bringbar sein. Insbesondere hat es sich als vorteilhaft erwiesen, den ersten Betriebsmodus im Rahmen eines Selbststartmodus der Steuer- und Recheneinheit aufrufbar zu gestalten bzw. als Primärmodus voreinzustellen. Mit Vorteil versehen lässt sich für einen Anwender ein optisches Messsystem z.B. am Bau im Rahmen einer der vorgenannten Weiterbildungen besonders effektiv nutzen, da es bei Einschalten automatisch in einen selbsteinpegelnden Modus des ersten Betriebsmodus übergeht. Nach dessen Abschluss ist das Koordinatensystem der Strahlungseinrichtung vorteilhaft mit dem Koordinatensystem eines Raumes des Zielobjektes und/oder einem Koordinatensystem einer Planinformation abgeglichen- ein Anwender kann so unmittelbar danach das optische Messsystem zur Vermaßung, in den Koordinaten des Raumes des Zielobjektes beziehungsweise in den Koordinaten einer Planinformation nutzen. Insbesondere hat es sich in Weiterbildung dazu als vorteilhaft erwiesen Punkt- und/oder Linienzeiger und/oder Pilotstrahlzeiger der Strahlungseinrichtung zu nutzen, um das Koordinatensystem des Rotationszeigers, insbesondere in einem vorerwähnten abgeglichenen Zustand, anzuzeigen.

Bevorzugt zeigt ein Punkt- oder Linienzeiger eine in der Azimut-Ebene liegende X- oder Y-Achse des Raum Koordinaten-Systems an, die beispielsweise als eine Parallele zu einer Raumwand oder dergleichen angezeigt werden kann. Ein Pilotstrahlzeiger der Strahlungseinrichtung zeigt bevorzugt eine Polarachse, beispielsweise eine Z-Achse oder dergleichen als Senkrechte zu einer Azimut-Ebene an. Ein Pilotstrahlzeiger kann dazu die Polarachse nach unten und/oder nach oben anzeigen. Insbesondere lässt sich ein Punkt- oder Linienanzeiger in Form eines Axicons oder dergleichen Optik mit separater Strahlungseinrichtung realisieren. Zusätzlich oder alternativ kann Strahlung der Strahlungseinheit des Rotationszeigers und/oder der Distanzmesseinrichtung genutzt werden.

Das optische Messsystem weist, dem Konzept der Erfindung folgend, insbesondere zur Unterstützung des zweiten Betriebsmodus, neben der Strahlungseinrichtung einen mit der Strahlungseinrichtung kommunizierbar verbindbaren Strahlungsempfänger auf, der zum Empfang und/oder Reflektion von optischer Strahlung der Strahlungseinrichtung ausgebildet ist. Bevorzugt weist der Strahlungsempfänger zusätzlich Sende- und Empfangsmittel zur Kommunikation mit der Strahlungseinrichtung auf. Insbesondere lässt sich dadurch eine auf der Steuerstrahlung basierende Datenverbindung zwischen dem Rotationszeiger und dem Strahlungsempfänger aufbauen. Eine Sende- und Empfangseinrichtung für die Steuerstrahlung kann beispielsweise auf die Nutzung von Infrarotstrahlung oder Funkwellen als Steuerstrahlung ausgelegt sein. Ganz allgemein sieht eine Weiterbildung am Strahlungsempfänger Sensormittel vor, die ausgebildet sind, das Lichtsignal und/oder den Messpunkt am Strahlungsempfänger mittels der Rotationseinheit und Rückkopplung zu derselben zu platzieren und festzuhalten - dies auch bei Bewegung des Strahlungsempfängers. Eine zum Empfang und/oder Reflektion optischer Strahlung - insbesondere der Zeigerstrahlung und/oder Messstrahlung - ausgelegte Sensorik des Strahlungsempfängers kann beispielsweise als ein Optiksensor, insbesondere vorteilhaft als ein Mehrquadranten-Optiksensor, ausgebildet sein. Ein Mehrquadranten-Optiksensor hat den Vorteil, dass ein Einfangquerschnitt des Strahlungsempfängers vergrößert und geeignet ist, das Lichtsignal für den Anwender leichter am Strahlungsempfänger zu platzieren. Diese Eigenschaft ist insbesondere in Kombination mit einem im zweiten Betriebsmodus vorgesehenen Scanmodus des Rotationszeigers in einem beschränkten Winkelbereich des Azimut-Winkels vorteilhaft. Vorteilhaft kann - insbesondere im zweiten Betriebsmodus - der Azimut-Winkel bzw. Drehwinkel des durch den Strahlungsempfänger vorgebbar gedrehten Lichtsignals sowie die Distanz von einem Referenzpunkt der Strahlungseinrichtung zum Strahlungsempfänger kontinuierlich erfasst werden. In einem derart vorteilhaft ausgebildeten zweiten Betriebsmodus ist es dem Anwender möglich, den Strahlungsempfänger mit dem Lichtsignal und dem Distanzmesspunkt so lange zu bewegen, bis dessen Ort mit einer über die Platzierung des Lichtsignals und/oder Messpunkts vorgegebenen Koordinate in einem Koordinatensystem des Raumes des Zielobjekts und/oder einer Planinformation übereinstimmt. Die Bewegung des Strahlungsempfängers kann gezielt erfolgen, wobei der Benutzer mittels geeigneter Anzeigemittel (z.B. Pfeile oder dgl.) vom System geführt wird. Des Weiteren kann das Lichtsignal auf einen zu einer vorgebbaren Koordinate passenden Azimuth-Winkel fixiert werden, und der Benutzer kann bei kontinuierlicher Distanzmessung den Strahlungsempfänger entlang des Lichtsignals so lange bewegen, bis die zu der vorgebbaren Koordinate passende Distanz zum Strahlungsempfänger an demselben angezeigt wird. Auf diese Weise wird die Koordinatenbestimmung auf eine eindimensionale Suche vorteilhaft reduziert. In einem solchen als Trackingmodus ausgebildeten zweiten Betriebsmodus ist es möglich, mittels dem Strahlungsempfänger zum Beispiel eine Position eines Bauobjekts, wie einer Säule, Wand, Fenster oder dergleichen in einem umfänglich angeordneten Zielobjekt zu bestimmen. Bisher müssen solche Bestimmungsmaßnahmen unter Zuhilfenahme mehrerer optischer System, d. h. separater Anzeige- und Messsysteme, vorgenommen werden.

Vorzugsweise weist das optische System eine geeignete Anzeigeschnittstelle für den Anwender auf, um z.B. aktuelle Koordinaten-Werte dem Anwender zur Verfügung zu stellen, wenn er den Strahlungsempfänger im zweiten Betriebsmodus bewegt. Beispielsweise kann dies eine Anzeige am Strahlungsempfänger selbst sein. Besonders bevorzugt kann dies ein Projektionsmittel sein, mittels dem Positions- und/oder Koordinatendaten des Lichtsignals und/oder Messpunkts - d. h. des Strahlungsempfängers - anzeigbar und/oder auf ein Zielobjekt projizierbar sind. Insbesondere hat es sich als vorteilhaft erwiesen, einen Azimut-Winkel des Lichtsignals und eine Distanz des Messpunkts anzeigbar, insbesondere auf Anforderung oder je nach Bedarf auch kontinuierlich anzeigbar zu gestalten.

Insgesamt bietet das Konzept der Erfindung in Weiterbildung des zweiten Betriebsmodus die Möglichkeit, einen ausgewählten Koordinatenpunkt im Koordinatensystem des Rotationszeigers im abgeglichenen Zustand anzuzeigen. Bevorzugt lässt sich dazu im zweiten Betriebsmodus über die Steuer und Recheneinheit ein Koordinatenanzeigemodus vorgeben. Zum Anzeigen einer Position des Strahlungsempfängers lässt sich dieser bevorzugt mit Punkt und/oder Linienzeigern sowie einem Pilotstrahlzeiger weiterbilden.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

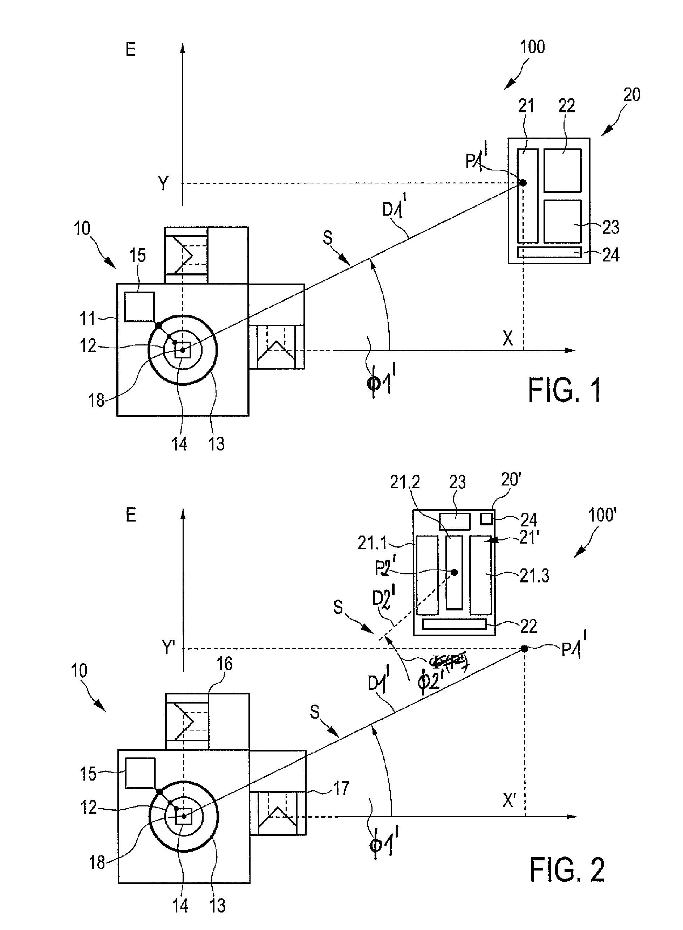

Fig. 1: eine erste bevorzugte Ausführungsform eines optischen Systems mit einer Strahlungseinrichtung und einem Strahlungsempfänger zur Realisierung eines kompakten Messsystems, das sich zur Bauauslegung in einer Azimut-Ebene eignet - das optische System ist in einem ersten Betriebsmodus gezeigt, wobei ein über einen Vollwinkel von 360° kontinuierlich rotierendes Lichtsignal erzeugt ist;
Fig. 2: eine weitere bevorzugte Ausführungsform eines optischen Systems ähnlich der Fig. 1, bei welchem in Variation der Strahlungsempfänger mit einem Quadrantensensor zum Empfang und zur Reflektion optischer Zeiger und/oder Messstrahlung versehen ist - das optische System ist in einem zweiten Betriebsmodus gezeigt, wobei ein in einem begrenzten Winkelbereich des Vollwinkels drehbares Lichtsignal erzeugt ist;

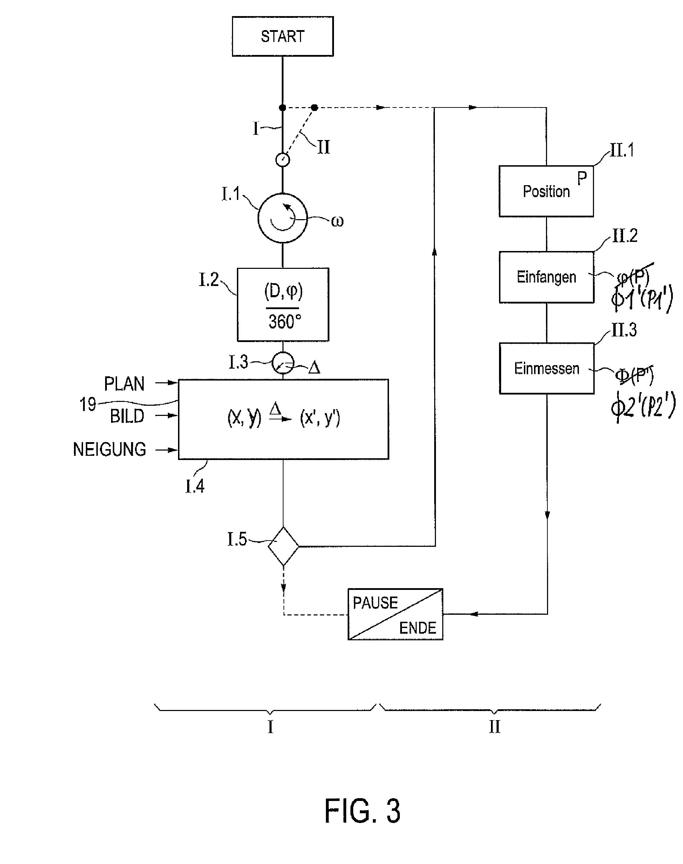

Fig. 3: ein Ablaufdiagramm von Verfahrensschritten beim Betreiben des optischen Systems der Fig. 1 und Fig. 2 im ersten und zweiten Betriebsmodus.

Fig. 1 zeigt ein zur Anzeige und Vermessung in einer Azimut-Ebene an einem umfänglich angeordneten Zielobjekt ausgelegtes, optisches System 100 mit einer Strahlungseinrichtung 10 und einem der Strahlungseinrichtung 10 zugeordneten Strahlungsempfänger 20. Die Strahlungseinrichtung 10 weist in einem Gehäuse 11 einen vorliegend als Rotationslaser ausgebildeten Rotationszeiger 12, eine diesem zugeordnete vorliegend als Absolut-Encoder ausgebildete Winkelerfassung 13, eine Distanzmesseinrichtung 14 und eine mit diesen zur Übermittlung von Daten und Regelwerten verbundene Steuer- und Recheneinheit 15 auf. Seitlich am Gehäuse 11 der Strahlungseinrichtung 10 sind zusätzlich zwei Axicone 16, 17 angebracht, die zur Anzeige einer als X und Y bezeichneten X-Achse und Y-Achse des Koordinatensystems der Strahlungseinrichtung 10 dienen. Vorliegend führen der Rotationszeiger 12, die Distanzmesseinrichtung 14 und die Axicone 16, 17 Strahlung einer einzigen hier als Lasereinheit ausgebildeten Strahlungseinheit 18 zur Erzeugung einer optischen Strahlung S. Die optische Strahlung S ist vorliegend in Form einer gebündelten und gepulsten Strahlung gebildet - sie dient sowohl als Messstrahlung für die Distanzmesseinrichtung 14 als auch als Zeigerstrahlung für den Rotationszeiger 12. Eine nicht näher dargestellte Optik der Strahlungseinrichtung 10 ist mit an sich bekannten Optikelementen wie Spiegeln, Linsen, Strahlteilern und dergleichen ausgebildet. Mittels der Optikelemente ist eine Strahlungsführung der optischen Strahlung S so gestaltet, dass an einem an einer Oberfläche des umfänglich angeordneten Zielobjekts angeordneten Punkt P sowohl ein Lichtsignal zur Anzeige eines Winkels ϕ in einer Azimut-Ebene E am umfänglich angeordneten Zielobjekt als auch ein Messpunkt zur Bestimmung einer Distanz D des Punktes P vom Ort der Strahlungseinheit 18 als Referenzpunkt gebildet ist. Die Distanzmesseinrichtung 14 ist vorliegend zur berührungslosen kontinuierlichen Messung der Distanz D zwischen dem Referenzpunkt und dem als Messpunkt dienenden Punkt P am Zielobjekt mittels der optischen Strahlung S ausgebildet. Sie ist in der Lage einen Messwert für die Distanz D an die Steuer- und Recheneinheit 15 zu übergeben. Die Winkelerfassung 13 ist vorliegend ausgebildet einen aktuellen Azimut-Winkel ϕ des am Punkt P gebildeten Lichtsignals kontinuierlich zu erfassen und einen geeigneten Messwert für den Azimut-Winkel ϕ an die Steuer- und Recheneinheit 15 zu übergeben. Die Steuer- und Recheneinheit weist geeignete Prozessor- und Speichermittel auf, um den aktuellen Azimut-Winkel ϕ des Lichtsignals am Punkt P der Distanz D des Messpunkts am Punkt P zuzuordnen und für eine Weiterverarbeitung kontinuierlich zu erfassen. Vorliegend sieht die Weiterverarbeitung vor allem eine Transformation der Polarkoordinaten D, ϕ in kartesische Koordinaten X, Y vor. Die Weiterverarbeitung sieht vorliegend auch eine zur Verfügungstellung der so bestimmten Koordinaten - sei es in einer Polarkoordinatenform oder in einer kartesischen Koordinatenform - für einen ersten Betriebsmodus I und zweiten Betriebsmodus II des optischen Systems 100 vor.

In einem in Bezug auf Fig. 1 und Fig. 3 erläuterten ersten Betriebsmodus I - der in Fig. 3 durch eine erste Schalterstellung symbolisiert ist - lässt sich mittels dem Rotationszeiger 12 nach dem START-Schritt des optischen Messsystems 100 in einem Schritt I.2 unter Aussendung der optischen Strahlung S als Zeigerstrahlung ein in der Azimut-Ebene E über einen Vollwinkel von 360° kontinuierlich rotierendes Lichtsignal mit veränderlichen Werten für D und ϕ realisieren. Dazu werden die sich kontinuierlich ändernden Distanzen D und Azimut-Winkel ϕ des Punktes P auf einer umfänglichen Oberfläche des Zielobjekts der Ebene E kontinuierlich von der Steuer- und Recheneinheit 15 erfasst. Um die Mess- und Erfassungszeit - insbesondere für die Distanz D - in einen Änderungszeitraum für die Distanz D und den Winkel ϕ einpassen zu können, wird zunächst in einem Schritt I.1 die Winkelgeschwindigkeit w des rotierenden Lichtsignals, d. h. des rotierenden Punktes P, adaptiv gestellt. Diese ist vorliegend nicht notwendiger Weise konstant, sonder kann im stepmeasure-Modus oder kontinuierlich messenden Modus, je nach Zweckmäßigkeit, variabel adaptierend eingestellt sein. Insbesondere kann ein Schritt 1.2 einen Vollwinkel 360° mehrfach durchlaufen, sodass eine Messwertaufnahme auf mehrere Durchgänge des Vollwinkels 360° verteilt werden kann. Nach Abschluss des Schrittes 1.2 ist es der Steuer- und Recheneinheit 15 möglich, aus der Liste der Messwerte für D, ϕ in einem Vollwinkelbereich von 360° auf das Raum-Koordinaten-System (X', Y') eines, vorliegend als Zielobjekt dienenden rechteckigen Raumes zu schließen. Der Koordinatenursprung und die Richtung der Koordinatenachsen können automatisch einem Plan entnommen werden oder durch Benutzerinteraktion bestimmt werden. Nach START befindet sich das optische System zunächst im in Fig. 1 gezeigten ersten Betriebsmodus I.. Das Raum-Koordinaten-System (X', Y') ist um einen Transformationswinkel Δ gegenüber dem Koordinatensystem (X, Y) der Strahlungseinrichtung 10 verdreht und/oder verschoben. Die Steuer und Recheneinheit 15 ist vorliegend ausgebildet, eine anschließende Koordinatentransformation vom Raum-Koordinaten-System (X, Y) als Drehung um den Transformationswinkel Δ in das Raum-Koordinaten-System (X', Y') zu bestimmen. Vorliegend wird dazu in einem weiteren Verfahrensschritt 1.3 zunächst der Transformationswinkel Δ bestimmt und anschließend in einem Verfahrensschritt 1.4 die Drehung der Strahlungseinrichtung 10 um einen Transformationswinkel Δ derart vorgenommen, dass die Axicone 16, 17 der Strahlungseinrichtung 100 das Raum-Koordinaten-System (X', Y') des Raumes des Zielobjekts in der Azimut-Ebene E anzeigen, wobei im Falle einer zusätzlichen Verschiebung ein Parallelversatz noch zu berücksichtigen ist.

Gegebenenfalls lassen sich in einem geeigneten Rechenmodul für den Schritt 1.4 zusätzliche Informationen aus einem PLAN, einem BILD oder einer NEIGUNG zur Verfügung stellen, um die Ausführung des Verfahrensschrittes 1.4 genauer gestalten zu können. Vorliegend weist die Steuer- und Recheneinheit 15 eine symbolisch dargestellte Schnittstelle 19 zur Übermittlung von Informationen eines Planes PLAN, eines fotoelektrischen Bildes BILD und/oder eines Neigungswinkels NEIGUNG auf, die für die Strahlungseinrichtung 10 relevant sein können.

Nach Interaktion in einem Verfahrensschritt 1.5 mit dem Anwender kann die Strahlungseinrichtung 10 so zunächst in einem in Fig. 2 gezeigten um den Transformationswinkel Δ gedrehten Zustand verbleiben bzw. bis ein Messverfahren beendet oder pausiert wird. In diesem Zustand wird das Raum-Koordinaten-System (X', Y') angezeigt. In einer abgewandelten, hier nicht gezeigten Ausführungsform, können die Achsen wie sie durch die Axicone 16, 17 angezeigt werden, in unterschiedlicher Farbgestaltung angezeigt werden - zum Beispiel die X-Achse X, X' in rot und die Y-Achse Y, Y' in grün.

Insgesamt ermöglicht der in Fig. 1 und Fig. 3 dargestellte erste Betriebsmodus I nach dem Aufstellen und Einschalten des optischen Systems 100 ein automatisches selbstständiges Einpegeln der Strahlungseinrichtung 10 in ein Koordinatensystem (X', Y') des Raumes in der Azimut-Ebene E. Dazu werden aufgrund der in einem Vollwinkel 360° erfassten Messwerte für D, ϕ Linien oder Kanten des Raumes erkannt und somit die relative Ausrichtung der Strahlungseinrichtung 10 relativ zum Raum über den Transformationswinkel Δ bestimmt. Anschließend wird die Strahlungseinrichtung 10 durch Drehung um den Transformationswinkel Δ in das Koordinatensystem des Raumes eingepegelt. Dazu kann die Strahlungseinrichtung 10 auf einer geeigneten Gabeleinrichtung oder Pegelplattform angebracht sein, die über geeignete Stepper oder kontinuierlich verstellbare Motoren auf Vorgaben der Steuer- und Recheneinheit 15 reagiert.

In einer hier nicht dargestellten gewandelten Ausführungsform ist es möglich, die Axicone 16, 17 mit geeigneten Motoren wie einem Stepper-Motor oder dergleichen zu versehen, um diese unabhängig vom Gehäuse 11 der Strahlungseinrichtung 10 so auszurichten, dass diese eine Punkt- oder Linienanzeige von einer Achse X, Y auf eine Achse X', Y' um den Transformationswinkel Δ drehen.

In der vorliegenden Ausführungsform ist insbesondere vorgesehen, dass das Koordinatensystem (X', Y') des Raumes mit einem Koordinatensystem des durch einen Plan zur Verfügung gestellten Grundrisses identifiziert werden kann. Mit anderen Worten steht der Steuer- und Recheneinheit 15 bei der vorliegenden Ausführungsform aufgrund der Liste von Messwerten für D, ϕ praktisch der Grundriss des Raumes in der Azimut-Ebene E des Zielobjekts nach geeigneter Umrechnung in kartesische Koordinaten zur Verfügung. Ein so ermittelter Grundriss kann mit einem Grundriss eines Plans über Planinformationen PLAN identifiziert werden. Diese Identifizierung kann beispielsweise auch durch eine Bildinformation BILD überprüft werden. Kurz gesagt, dient der vorliegende erste Betriebsmodus I in vorteilhafter Weise einem Anwender dazu, nach dem Aufstellen und Einschalten des optischen Systems 100 den Grundriss eines Raumes im Zielobjekt selbstständig zu erfassen und mit einem entsprechenden Grundriss eines Plans zu identifizieren. Soweit mehrere Grundrisse in einer Planinformation PLAN zur Verfügung stehen, kann das optische System 100 selbstständig identifizieren, welcher der Pläne aus der Planinformation PLAN korrekt ist. Eine Interaktion mit dem Anwender entfällt weitestgehend, was die Applikation bedeutend erleichtert. Eine Identifikation kann beispielsweise aufgrund größter Übereinstimmung erfolgen, etwa durch Vergleich von Koordinaten nach der Methode der geringsten Fehlerquadrate oder dergleichen Optimierungsmethode. Sollten nicht vernachlässigbare Unsicherheiten bestehen, kann dennoch der Anwender hinzugezogen werden.

Dem Anwender ist es insbesondere möglich - beispielsweise durch Interaktion mit einem Display oder einer von der Strahlungseinrichtung 10 erzeugten Projektionsfläche - einen geeigneten Plan/Grundriss des Raumes des Zielobjekts zu identifizieren. Zur Erzeugung einer Projektionsfläche weist die Strahlungseinrichtung einen nicht näher dargestellten Miniprojektor auf, der die Projektion als Anwenderschnittstelle erzeugt. Beispielsweise könnte eine Projektion an eine geeignete Wand oder einen Boden des Raumes des Zielobjektes erfolgen. Insbesondere kann für einen nachfolgend beschriebenen zweiten Betriebsmodus II eine aktuelle Position eines Punktes P oder P' insbesondere eine IstPosition eines Punktes P und eine Soll-Position eines Punktes P' angezeigt oder projiziert werden.

In dem durch die zweite Schalterstellung gestrichelt dargestellten zweiten Betriebsmodus II der Fig. 2 und Fig. 3 ist es möglich einen - beispielsweise in Fig. 2 beispielhaft dargestellten - definierten Absteckpunkt als Soll-Position eines Punktes P' im Raum-Koordinaten-System (X', Y') automatisch zu identifizieren. Die Fig. 2 zeigt dazu im Wesentlichen das optische System 100 der Fig. 1 in leicht abgewandelter Form eines optischen Systems 100'. Dieses unterscheidet sich vom optischen System 100 der Fig. 1 in der Ausführung des Strahlungsempfängers 20'. Im Unterschied zum Strahlungsempfänger 20 ist der Strahlungsempfänger 20' mit einem Quadrantendetektor 21' mit drei Detektorfeldern 21.1, 21.2, 21.3 ausgestattet, die in Interaktion mit der Strahlungseinrichtung 10 eine Einpegelung der optischen Strahlung S in einen mittigen Bereich 21.2 des Quadrantendetektors 21' erlauben.

Der Strahlungsempfänger 20 der Fig. 1 weist einen einfachen Detektor 21 und eine Anzeigevorrichtung 22 zur Anzeige einer Position des Strahlungsempfängers 20 auf. Zusätzlich ist eine Eingabevorrichtung 23 vorgesehen, über welche die Strahlungseinrichtung 10 durch Nutzereingaben gesteuert werden kann. Der Strahlungsempfänger weist dazu eine Sende- und Empfangseinrichtung 24 auf, die in der Lage ist, über eine nicht mehr dargestellte Steuerstrahlung drahtlos mit der Strahlungseinrichtung 10 zu kommunizieren. Entsprechend weist die Strahlungseinrichtung 10 eine nicht näher dargestellte Sende- und Empfangseinrichtung für die Steuerstrahlung auf, um die Kommunikationsverbindung zum Strahlungsempfänger 20 darzustellen.

Im vorliegenden in Fig. 2 dargestellten Fall sind für identische oder ähnlich Teile oder Teile identischer oder ähnlicher Funktion des optischen Systems 100' gleiche Bezugszeichen wie beim optischen System 100 verwendet. Fig. 2 zeigt das optische System 100' im Vergleich zum optischen System 100 der Fig. 1 in einem Zustand, bei dem die Strahlungseinrichtung 10 und/oder die Axicone 16, 17 auf das Raum-Koordinaten-System (X', Y') des Raumes des Zielobjekts in der Azimut-Ebene E eingepegelt ist. Letzteres ist um ein Transformationswinkel Δ in der vorerläuterten Weise zum ursprünglichen Koordinatensystem (X, Y) der Strahlungseinrichtung 10 gedreht.

Im zweiten Betriebsmodus II ist vorgesehen, dass zunächst die Position P₁' an einer Polarkoordinate ϕ₁', D₁' in einem Verfahrensschritt II.1 erfasst wird. (Kommentar: Vielleicht sollte noch erwähnt werde wie die Erfassung erfolgt. Durch Eingabe des Benutzers, durch Matchen von Messdaten mit einem Plan, durch Einfangen des Lichtsignals mit dem Strahlungsempfängers, etc.. Kommentar: Vielleicht sollte man die Koordionaten im gedrehten Koordinatensystem mit gestrichenen Grössen bezeichnen.) Dieser Zustand des optischen Systems 100 ist in Fig. 1 dargestellt. In diesem Zustand erfolgt in einem zweiten Verfahrensschritt 11.2 ein sogenanntes Einfangen des Punktes P₁' - also der optischen Strahlung S als Mess- und Zeigerstrahlung - am Strahlungsempfänger 20 bzw. 20' in einem Verfahrensschritt 11.2.

In einem weiteren Schritt 11.3 kann ein Einmessen eines Messpunktes P₂' erfolgen, der beispielsweise an den Koordinaten Φ₂', D₂' in bekannter Weise vorgebbar ist. Entweder kann ein Anwender entsprechende Koordinaten - sei es in kartesischer Form oder in Polarform - über eine Eingabefläche 23 am Empfänger 20 eingeben. Üblicher Weise wird es sich jedoch als besonders vorteilhaft erweisen, dass ein Anwender den Empfänger 20' einfach so lange bewegt bis ihm eine Anzeige 22 am Empfänger 20 oder eine von der Strahlungseinrichtung 10 vorgenommene Projektion, die Koordinaten des vorgegebenen Punktes P₂' - also den neuen Drehwinkel Φ₂' von P₂' und die neue Distanz D₂' von P₂' - anzeigt. Die Anzeige bzw. Einganbe der Koordinaten kann alternativ auch in kartesischen Koordinaten erfolgen. Dieser als Einmessen 11.3 bezeichnete Schritt umfasst also eine Änderung der Position des Lichtsignals und des Messpunkts vom Punkt P₁' auf den Punkt P₂' unter Änderung der Koordinaten (D₁', Φ₁') auf (D₂', Φ₂').

Grundsätzlich kann dies in einer ersten Variante dadurch erfolgen, dass die Messstation die optische Strahlung S auf den entsprechenden neuen Winkel Φ₂' schwenkt und der Strahlungsempfänger 20' - sobald er sich im Winkel Φ₂' an der richtigen Distanz D₂' befindet - beispielsweise ein optisches oder akustisches Signal von sich gibt. Alternativ kann ein Anwender den Strahlungsempfänger 20' zusammen mit der Strahlung S - also dem Distanzmesspunkt und dem Lichtsignal - im eingefangenen Zustand so lange bewegen, bis die richtige Position signalisiert wird. Die Bewegung des Strahlungsempfängers kann gezielt vom System geführt erfolgen indem dem Anwender durch geeignete Anzeigemittel am Strahlungsempfänger (z.B. Pfeile oder dgl.) eine Bewegungsrichtung vorgeschlagen wird. Ein Einbringen einer Markierung am Boden oder an einer Wand oder dergleichen Ort eines Zielobjekts ist dem Anwender erleichtert. Der Strahlungsempfänger 20' hat eine nicht näher dargestellte optische Zeigereinrichtung wie einen Pilotstrahl nach oben und unten und auch seitliche Zeigereinrichtungen.

Insgesamt ermöglicht es das optische System 100, 100' einem Anwender Punkte P1', P2', P3'... usw. sequenziell - zum Beispiel im Plan definierte Absteckpunkte - automatisch anzufahren, indem er den Strahlungsempfänger 20, 20' jeweils an eine entsprechende Stelle bewegt. Es kann auch die Messstrahlung S und ein Signal des optischen Systems 100, 100' die entsprechende Stelle anzeigen. So lassen sich Säulen, Wände, Türen, Fenster oder dergleichen planmäßig ausgewiesene Vermessungspunkte in einer Azimut-Ebene E besonders einfach abstecken.

Das optische System 100, 100' weist vorliegend besonders bevorzugte entsprechende MMI-Funktionen am Empfänger 20, 20' auf, die nicht besonders eingezeichnet sind. Es ist auch denkbar, dass am Empfänger 20, 20' grafisch dargestellt wird - zum Beispiel auch über eine fotoelektrische Bildkamera oder dergleichen - an welchem Ort sich der Strahlungsempfänger 20, 20' im Raum-Koordinaten-System (X', Y') des Raumes in der Azimut-Ebene E befindet.

## Patentansprüche

1. Optisches System (100, 100') aufweisend:
- eine Strahlungseinrichtung (10) mit
einem Rotationszeiger, insbesondere Rotationslaser, zur berührungslosen Anzeige einer Azimut-Ebene (E) an einem umfänglich angeordneten Zielobjekt, der ausgebildet ist, unter Aussendung optischer Zeigerstrahlung ein in der Azimut-Ebene (E) rotierendes oder drehendes Lichtsignal zu erzeugen,
- eine Steuer- und Recheneinheit (15), die ausgebildet ist, den Rotationszeiger in einen ersten Betriebsmodus (I) oder einen zweiten Betriebsmodus (II) zu versetzen, wobei im ersten Betriebsmodus (I) mittels dem Rotationszeiger ein über einen Vollwinkel kontinuierlich oder schrittweise rotierendes und in dem zweiten Betriebsmodus (II) ein in einem begrenzten Winkelsektor eines Vollwinkels drehbares Lichtsignal erzeugbar ist,
- **dadurch gekennzeichnet, dass**
die Strahlungseinrichtung (10) weiter aufweist
- eine Winkelerfassung (13) mittels der ein aktueller Azimut-Winkel (Φ, Φ') des Lichtsignals erfassbar und an die Steuer- und Recheneinheit (15) übergebbar ist;
- eine Distanzmesseinrichtung (14), die zur berührungslosen Messung einer Distanz (D, D') zwischen einem Referenzpunkt und wenigstens einem Distanzmesspunkt am Zielobjekt oder an einem Strahlungsempfänger (20, 20') mittels optischer Messstrahlung ausgebildet ist und mittels der die Distanz an die Steuer- und Recheneinheit (15) übergebbar ist, wobei
- eine Strahlungsführung der Messstrahlung und der Zeigerstrahlung in der Strahlungseinrichtung (10), die derart verläuft, dass der Distanzmesspunkt am oder in unmittelbarer Nähe des Lichtsignals platziert ist; und
- die Steuer- und Recheneinheit (15) ausgebildet ist, den aktuellen Azimut-Winkel (Φ, Φ) des Lichtsignals und die aktuelle Distanz (D, D') des Messpunkts für eine Weiterverarbeitung im ersten und zweiten Betriebsmodus (I, II) zu erfassen.

2. Optisches System (100, 100') nach Anspruch 1, **dadurch gekennzeichnet, dass** eine optische Achse für die Strahlungsführung der Zeigerstrahlung des Rotationszeigers und eine optische Achse für die Strahlungsführung der Messstrahlung der Distanzmesseinrichtung in der Strahlungseinrichtung (10), insbesondere im Bereich einer Auskoppeloptik, teilweise übereinander oder wenigstens para-axial zueinander angeordnet sind.

3. Optisches System (100, 100') nach Anspruch 1 oder 2, **dadurch gekennzeichnet, dass** wenigstens im ersten Betriebsmodus (I) die Winkelgeschwindigkeit (w) des rotierenden Lichtsignals adaptiv einstellbar ist, wobei im ersten Betriebsmodus (I) der Azimut-Winkel (Φ) als ein Rotationswinkel des kontinuierlich rotierenden Lichtsignals kontinuierlich erfassbar ist.

4. Optisches System (100, 100') nach einem der Ansprüche 1 bis 3, **dadurch gekennzeichnet, dass** wenigstens im ersten Betriebsmodus (I) ein Weiterverarbeitungsmodul der Steuer- und Recheneinheit (15) ausgebildet ist, mittels der Werte der Azimut-Winkel (Φ) und Distanzen (D) Raumkoordinaten des Zielobjektes zu erfassen, insbesondere unter Verwendung weiterer Bildgabemittel und/oder Signalisierungsmittel.

5. Optisches System (100, 100') nach einem der Ansprüche 1 bis 4, **dadurch gekennzeichnet, dass** die Strahlungseinrichtung (10) eine Schnittstelle (19) aufweist, über die der Steuer- und Recheneinheit (15) wenigstens eine Planinformation (PLAN) zuführbar ist.

6. Optisches System (100, 100') nach einem der Ansprüche 1 bis 5, weiter aufweisend eine in dem Gehäuse (11) angeordnete fotoelektrische Bilderfasssung mit einer Sucher- und Kameraoptik sowie einen diese verbindenden Bildpfad zur Erfassung von Zielpunkten des Zielobjekts und einer Bildverarbeitungseinheit zur Erstellung eines fotoelektrischen Bildes des Zielobjektes.

7. Optisches System (100, 100') nach einem der Ansprüche 1 bis 6, **dadurch gekennzeichnet, dass** die Strahlungseinrichtung (10) einen Kippsensor aufweist, mittels dem ein Neigewert (NEIGUNG) der Steuer- und Recheneinheit (15) zuführbar ist.

8. Optisches System (100, 100') nach einem der Ansprüche 1 bis 7 **dadurch gekennzeichnet, dass** im zweiten Betriebsmodus (II) der Azimut-Winkel (Φ), von einem Drehwinkel des durch den Strahlungsempfänger (20, 20') vorgebbar gedrehten Lichtsignals kontinuierlich erfassbar ist.

9. Optisches System (100, 100') nach einem der Ansprüche 1 bis 8, **dadurch gekennzeichnet, dass** der Azimut-Winkel (ϕ, Φ) des Lichtsignals und der Abstand des Messpunkts auf Anforderung anzeigbar, insbesondere kontinuierlich anzeigbar sind.

10. Optisches System (100, 100') nach einem der Ansprüche 1 bis 9, weiter aufweisend Anzeigemittel und/oder Projektionsmittel, mittels der Positionsdaten anzeigbar und/oder auf ein Zielobjekt projizierbar sind.

11. Optisches System (100, 100') nach einem der Ansprüche 1 bis 10, **dadurch gekennzeichnet, dass** der Strahlungsempfänger (20, 20') zusätzlich zur Aussendung einer Steuerstrahlung ausgebildet ist, mittels der, insbesondere im ersten und/oder zweiten Betriebsmodus (II), eine auf der Steuerstrahlung basierende Daten-Verbindung zwischen der Strahlungseinrichtung (10) und dem Strahlungsempfänger (20, 20') aufbaubar ist, insbesondere die Strahlungseinrichtung (10) eine Empfangseinrichtung (24) für die Steuerstrahlung aufweist.

12. Optisches System (100, 100') nach einem der Ansprüche 1 bis 11, **dadurch gekennzeichnet, dass** die Zeigerstrahlung und die Messstrahlung mit der gleichen optischen Strahlung (S) gebildet ist.

13. Optisches System (100, 100') nach einem der Ansprüche 1 bis 11, **dadurch gekennzeichnet, dass** die Zeigerstrahlung und die Messstrahlung unterschiedlich sind, insbesondere wellenlängen- und/oder farb-unterschiedlich sind.

14. Optisches System (100, 100') nach einem der Ansprüche 1 bis 13, **dadurch gekennzeichnet, dass** die Strahlungseinrichtung (10) wenigstens einen optischen Punkt- oder Linienzeiger aufweist, insbesondere in Form eines Axicons (16, 17), mittels dem wenigstens eine Achse des Koordinatensystems der Strahlungseinrichtung (10) am Zielobjekt anzeigbar ist.

15. Optisches System (100, 100') nach einem der Ansprüche 1 bis 14, **dadurch gekennzeichnet, dass** die Strahlungseinrichtung (10) einen wenigstens eine Polar-Achse des Koordinatensystems des Rotationszeigers anzeigenden Pilotstrahlzeiger aufweist und/oder der Strahlungsempfänger (20, 20') einen wenigstens eine Polar-Achse des Koordinatensystems des Strahlungsempfängers (20, 20') anzeigenden Pilotstrahlzeiger aufweist.

16. Optisches System (100, 100') nach einem der Ansprüche 1 bis 15, **dadurch gekennzeichnet, dass** der erste Betriebsmodus (I) einen über die Steuer- und Recheneinheit (15) automatisch aktivierbaren Selbstausrichtungsmodus umfasst, in dem das Koordinatensystem ((X, Y)) der Strahlungseinrichtung (10) mit dem Koordinatensystem einer Planinformation und/oder dem Koordinatensystem ((X', Y')) eines Raumes des Zielobjektes abgleichbar ist, insbesondere mittels Punkt- oder Linienzeiger und/oder Pilotstrahlzeiger der Strahlungseinrichtung (10) das Koordinatensystem der Strahlungseinrichtung (10) in abgeglichenem Zustand anzeigbar ist.

17. Optisches System (100, 100') nach einem der Ansprüche 1 bis 16, **dadurch gekennzeichnet, dass** der zweite Betriebsmodus (II) einen über die Steuer- und Recheneinheit (15) automatisch aktivierbaren Koordinatenanzeigemodus umfasst, in dem ein ausgewählter Koordinatenpunkt im Koordinatensystem der Strahlungseinrichtung (10) in abgeglichenem Zustand, insbesondere mittels Punkt- oder Linienzeiger und/oder Pilotstrahlzeiger der Strahlungseinrichtung (10), anzeigbar ist.
